# EUROPEAN PATENT APPLICATION

(11) **EP 4 700 340 A1**
(43) Date of publication of application: **25.02.2026**
(21) Application number: 23934081.3
(22) Date of filing: 20.04.2023
(51) Int. Cl.: G01G 19/387

(54) **WATERPROOF STRUCTURE OF COMBINATION WEIGHING APPARATUS**

(71) Applicant: Yamato Scale Co., Ltd., Akashi-shi, Hyogo 673-0849 (JP)
(72) Inventor: NAGAI, Takayuki, Akashi-shi, Hyogo 673-0849 (JP); SUEMICHI, Ryo, Akashi-shi, Hyogo 673-0849 (JP)
(74) Representative: Ter Meer Steinmeister & Partner
(86) International application number: PCT/JP2023/015758
(87) International publication number: WO 2024/218936

(57) **Abstract**

A combination weighing apparatus is provided that includes a center body having openings, hoppers, and driver units that open and close gates of these hoppers, in which the driver units are mounted to the openings of the center body. The cabinet of each driver unit includes a metallic unit case having an opening, a metallic cover case that covers the unit case, and a packing member that covers the outer circumferential surface of the unit case. The packing member includes an elastic sealing material and is held between the unit case and the cover case. The hoppers are each removably attached to a different one of the driver units.

## Description

### TECHNICAL FIELD

This disclosure relates to a combination weighing apparatus operable to weigh and discharge a predetermined amount of articles, for example, foodstuffs, more particularly to a waterproof structure developed for such a combination weighing apparatus.

### BACKGROUND ART

The patent literature 1 describes an example of such combination weighing apparatuses. The combination weighing apparatus is equipped with a center body, and a dispersing feeder and a plurality of linear feeders that are disposed on the upper surface of the center. This apparatus is further equipped with a plurality of feeding hoppers, weighing hoppers, and memory hoppers that are disposed on the outer circumferential surface of the center body. The dispersing feeder radially disperses and transports articles thrown down from the upper center of the apparatus. The linear feeders receive the articles thus dispersed and transported and then linearly transport the received articles further outward. The feeding hoppers receive the articles from the linear feeders and temporarily retain the received articles. The weighing hoppers receive and weigh the articles discharged from the feeding hoppers. The memory hoppers receive the weighed articles from the weighing hoppers and temporarily retain them.

The combination weighing apparatus thus structured executes combinatorial computations based on the weights of the articles measured by the weighing hoppers and the weights of the articles retained in the memory hoppers. This apparatus then selects, from the weighing hoppers and memory hoppers, a combination(s) of weighing and memory hoppers that stays within a predetermined range of weights. Then, the apparatus opens the gates of the selected weighing hopper and memory hopper to discharge the articles into a collection chute, guiding the collected articles into a packaging apparatus disposed down below.

The combination weighing apparatuses used to weigh foodstuffs need to be cleaned often for hygienic purposes. The combination weighing apparatus described in the patent literature 1 has, in a base supporting the center base, an opening for maintenance which is closable with a cover plate. For protection of the electric system embedded in the base, this opening is subjected to a waterproofing treatment to prevent cleaning water from penetrating into the base during cleaning.

### CITATION LIST

### PATENT LITERATURE

Patent literature 1: JP 2017-9318 A

### SUMMARY OF THE INVENTION

### TECHNICAL PROBLEMS

In the combination weighing apparatuses, devices and components, other than the base opening, may have to be waterproofed as well, for example, the dispersion feeder's top cone, trough-attached portions of the linear feeders, and/or portions of driver units to which the feeding hoppers, weighing hoppers and memory hoppers are attachable.

Besides, any combination weighing apparatuses used to weigh foodstuffs should desirably be equipped to prevent the risk of bacteria propagation in addition to waterproofness during cleaning.

When the combination weighing apparatus undergoes any mechanical or any other trouble in a driver unit(s) such as breakdown, the hoppers may have to be removed from the trouble-undergoing driver unit, and the driver unit is then removed from the center body before maintenance of this driver unit, for example, repair of or part replacement.

In the apparatus of the patent literature 1, the feeding hopper and the weighing hopper are both attached to the same one of the driver units. When any driver-related trouble occurs in one of these hoppers, the other hopper irrelevant to the trouble may have to be removed as well as the troubled one, and the relatively heavy driver unit mounted with gate drivers of different hoppers may also have to be removed from the center body. This may require time-consuming, numerous handling steps for the maintenance.

To address these issues of the known art, this disclosure is directed to providing a combination weighing apparatus that excels in waterproofness, maintainability, and preventability of possible bacteria propagation.

### SOLUTIONS TO THE PROBLEMS

To this end, this invention provides the following technical features.
1] This invention provides a waterproof structure for a combination weighing apparatus equipped with: a center body having a plurality of openings; a plurality of hoppers each having a gate in a lower portion thereof; and a plurality of driver units each having a cabinet, the plurality of hoppers being removably attachable to a respective one of the plurality of driver units, the cabinets of the plurality of driver units being mountable to the plurality of openings of the center body in a manner that the plurality of openings are closable with the cabinets. The plurality of driver units are allowed open and close the gates of the plurality of hoppers. The cabinets of the plurality of driver units each have a unit case, a cover case, and a packing member. The unit case includes a metallic material and has an opening formed correspondingly to each of the plurality of openings of the center body. The cover case includes a metallic material and covers the unit case. The packing member includes an elastic sealing material and is fitted into between the unit case and the cover case so as to cover an outer circumferential surface of the unit case.

In the combination weighing apparatus according to this invention, a packing member is fitted into between the metal-made unit case and the metal-made cover case covering this unit case. This packing member may serve to seal a possible gap between the unit case and the cover case. As a result, cleaning water or foodstuff residues, if any, may be unlikely to penetrate into between the unit case and the cover case, and the risk of bacteria propagation between these two cases may be successfully avoidable.

In the case of trouble or breakdown in the driver or weighing system of any hopper, the driver unit undergoing the trouble alone may have to be removed and repaired or replaced as required. Thus, maintenance work may be facilitated as compared with two different hoppers being attached to the same driver unit.

2] In a preferred embodiment of this invention, the plurality of hoppers include a plurality of feeding hoppers to be supplied with articles to be weighed, a plurality of weighing hoppers that weigh the articles received from the plurality of feeding hoppers, and a plurality of memory hoppers that temporarily retain the articles weighed by and received from the plurality of weighing hoppers. The plurality of feeding hoppers and the plurality of memory hoppers have driver units having identical specs.

This embodiment may allow manufacture cost reduction by using the devices and components of the same specs.

3] In one embodiment of this invention, the unit cases each include a die-cast metal, and the cover cases each include a rust-proof metal.

The unit case, though may be molded in any optional shape using a die-cast metal such as an aluminum alloy, may possibly be corrodible on its surface. This embodiment, however, may successfully prevent the risk of corrosion by covering the unit case with the cover case made of a rust-proof metal.

4] In other embodiments of this invention, the cover cases each have an opening, the packing members are each in the form of a case having an opening, outer circumferential surfaces of the unit cases fitted into the packing members through the openings of the packing members are covered with the packing members, and outer circumferential surfaces of the cover cases fitted into the cover cases are covered with the cover cases.

According to these embodiments, the unit case is fitted into the case-like packing member, and the packing member is then fitted into the cover case. Thus, the cover case, packing member and unit case that differ in size are sequentially put together in the form of nesting to form a cabinet.

5] In other embodiments of this invention, the unit cases each have a flange on an outer circumferential portion of the opening thereof, the flanges allowed to abut against an outer circumferential surface of the center body, and the packing members each have a turn-up flange on an outer circumferential portion of the opening thereof, the turn-up flanges being externally mountable to the flanges.

According to these embodiments, the turn-up flange of the packing member is externally fitted to the flange of the unit case. This may improve waterproofness between the unit case and the packing member and also ensure secure fitting of the packing member to the unit case, eliminating the risk of any displacement.

6] In an embodiment of this invention, the cover cases each have a flange on an outer peripheral portion of the opening thereof, and the flanges are each allowed to cover the turn-up flanges of the packing members from an outer circumferential side thereof.

According to this embodiment, the flange of the cover case is used to protect the easily damageable turn-up flange of the packing member made of an elastic sealing material.

7] In other embodiments of this invention, there is a void between each of the turn-up flange of the packing member and of the flange of the cover case that covers the flange from an outer circumferential side thereof, the void having an annular shape along an outer circumference of the opening of the cover case.

Possibly, cleaning water may penetrate into the cover case from between the flange of the cover case and the center body. This embodiment provides, as a flow path for water drainage, the annular void formed between the flange of the cover case and the turn-up flange of the packing member. Cleaning water, if penetrated into the cover case, may be guided by the annular void serving as a flow path to flow downward to the driver unit and then discharged from between the flange of the cover case and the center body. Thus, cleaning water that possibly penetrated into the driver unit may be prevented from staying there for long periods of time.

8] In other embodiments of this invention, one of an engaging portion or a coupling portion is provided in an upper portion of the opening of each of the unit cases and in an upper portion of each of the plurality of openings of the center body, an inclined surface of each of the unit cases and an inclined surface of the center body is engageable engaged with each other at the engaging portion or each of the unit cases and the center body is allowed to couple to each other with a fastening member at the coupling portion. The other one of the engaging portion or the coupling portion is provided in a lower portion of the opening of each of the unit cases and in a lower portion of each of the plurality of openings of the center body, the inclined surface of each of the unit cases and the inclined surface of the center body is allowed to couple to each other with the fastening member at the coupling portion and thereby securable to each other at the engaging portion.

According to this embodiment, each of the unit cases and the center body are fastened to each other with a fastening member at the coupling portion provided in the opening's upper or lower portion to securely engage the inclined surfaces at the engaging portion provided in the opening's upper or lower portion. Thus, each of the driver units and the center body may be firmly coupled to each other. In this instance, the coupling portion at which the fastening member is used may be formed in either one of the opening's upper or lower portion, which may reduce the number of fastening positions.

### EFFECTS OF THE INVENTION

A gap may be easily generated between the unit case and the cover case for the unit case both made of a metal, which, however, may be sealed with the packing member interposed therebetween. Thus, cleaning water or foodstuff residues, if any, may be unlikely to penetrate into between the unit case and the cover case, and the risk of bacteria propagation between these two cases may be successfully avoidable. As a result, the apparatus may improve in waterproofness and achieve a higher level of hygiene.

Further advantageously, maintenance is facilitated and improved by having the hoppers mounted to different driver units.

### BRIEF DESCRIPTION OF THE DRAWINGS

Fig. 1 is a schematic, longitudinal front view of a combination weighing apparatus according to an embodiment of this invention.
Fig. 2 is a perspective view of a center body.
Fig. 3 is a perspective view of a driver unit for feeding hopper.
Fig. 4 is a perspective view of a driver unit for weighing hopper.
Fig. 5 is a perspective view from the right side of a feeding hopper attached to a driver unit.
Fig. 6 is a perspective view from the left side of the feeding hopper attached to the driver unit.
Fig. 7 is a perspective view from the right side of a weighing hopper attached to a driver unit.
Fig. 8 is a perspective view from the left side of the weighing hopper attached to the driver unit.
Fig. 9 is an exploded perspective view of a cabinet of the feeding hopper driver unit.
Fig. 10 is a longitudinal lateral view of the feeding hopper driver unit.
Fig. 11 is an enlarged, longitudinal view in cross section of a main portion that has been dismounted from the center body.
Fig. 12 is an enlarged, longitudinal view in cross section of the main portion that has been mounted to the center body.
Fig. 13 is an exploded perspective view of an upper cabinet of the weighing hopper driver unit.
Fig. 14 is a longitudinal lateral view of the weighing hopper driver unit.
Fig. 15 is a longitudinal lateral view in part of the weighing hopper driver unit.
Fig. 16 is a longitudinal view in cross section of a waterproof structure enlarged in part.
Fig. 17 is a longitudinal lateral view of a driver unit for feeding hopper according to another embodiment of this invention.
Fig. 18 is a longitudinal lateral view of a driver unit for weighing hopper according to another embodiment of this invention.
Fig. 19 is a schematic, longitudinal front view of a combination weighing apparatus according to another embodiment of this invention.
Fig. 20 is a perspective view of a center body according to another embodiment of this invention.
Fig. 21 is a perspective view of a memory hopper and its driver unit according to another embodiment of this invention that have been separated from each other.
Fig. 22 is a perspective view of the memory hopper and its driver unit according to another embodiment of this invention that have been mounted to each other.

### DESCRIPTION OF EMBODIMENTS

Embodiments of this invention are hereinafter described in detail with reference to the accompanying drawings.

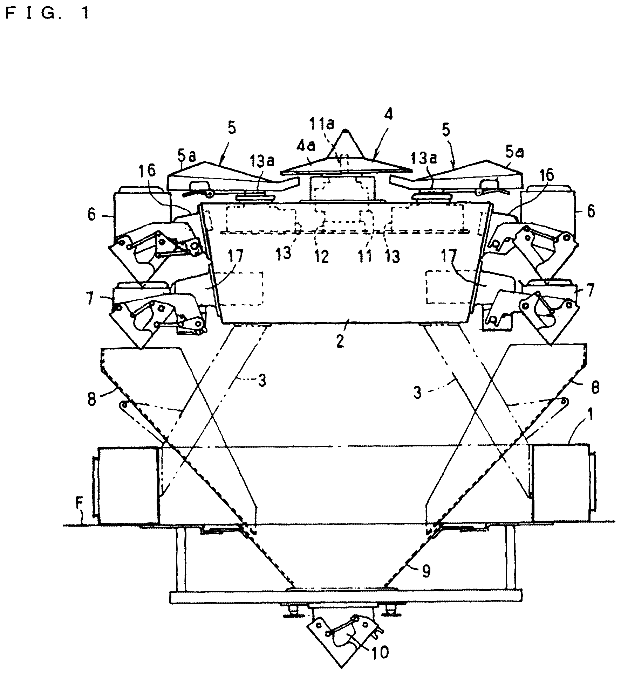

Fig. 1 is a schematic, longitudinal front view of a combination weighing apparatus according to an embodiment of this invention.

The combination weighing apparatus according to this embodiment weighs and collects a predetermined amount of articles such as foodstuffs, for example, snacks. This combination weighing apparatus is installed on a floor surface F of a tower-like frame. This tower-like frame is so structured that allows an operator to climb up and down. The articles within a predetermined range of weights measured and collected by the combination weighing apparatus are thrown down into an unillustrated packaging apparatus installed beneath the floor surface, where the collected articles are then packed into pouches.

A base 1 is installed on the floor surface F. The base 1 has a hollow structure with an opening penetrating through at its center. At the center right above the base 1, a hollow center body 2 is supported by a plurality of legs 3. The hollow center body 2 has a polygonal columnar shape small in height.

At the upper center the center body 2 is disposed a dispersion feeder 4 having a top cone 4a driven to vibrate. This dispersion feeder 4 receives, using the top cone 4a driven to vibrate, articles dropping down from a feeding conveyer illustrated in the drawings. Then, the dispersion feeder 4 radially disperses and transports the received articles. A large number of linear feeders 5 are disposed radially around the dispersion feeder 4. These linear feeders 5 each have a trough 5a driven to vibrate. The linear feeders 5 receive the articles dispersed and transported by the dispersion feeder 4 and linearly transport the received articles outward using the troughs 5a.

A plurality of feeding hoppers 6 and weighing hoppers 7 are disposed on the outer circumferential wall of the center body 2. The feeding hoppers 6 each temporarily retain and then discharge the articles transported from the linear feeder 5. The weighing hoppers 7 each receive the articles discharged from the feeding hopper 6 and measure the weight of the received articles. The combination weighing apparatus is thus equipped with multiple sets of these feeders and hoppers each including the linear feeder 5, feeding hopper 6 and weighing hopper 7.

A controller installed in the center body 2, not illustrated in the drawings, controls the components and devices of this apparatus. The controller also executes combinatorial computations based on the weight values of the articles measured by the weighing hoppers 7 to select a combination(s) of the weighing hoppers 7 containing the articles of a weight that stays within a predetermined range of weights. The combinatorial computations select, from various combinations of the weight values of the articles in the weighing hoppers 7, an optimal combination of hoppers containing the articles of a weight equal to a total target weight or most approximate to another target weight within a range of predetermined range of weights greater than or equal to the total target weight.

The controller discharges the articles from the weighing hoppers 7 selected as an optimal combination of hoppers.

A collection chute 8 is disposed below the weighing hoppers 7. The collection chute 8 receives the articles discharged from the weighing hoppers 7 selected as an optimal combination of hoppers and then guides the received articles to drop downward toward the apparatus center . A collection funnel 9 and a collection hopper 10 are disposed at the center down below the collection chute 8. The collection funnel 9 collects the articles dropping downward along the collection chute 8 to the apparatus center. The collection hopper 10 temporarily retains the collected articles and is opened to throw out the articles based on a discharge command transmitted from the packaging apparatus.

A vibration mechanism 11 having a driver shaft 11a is installed at the center inward of the center body 2. The top cone 4a of the dispersion feeder 4 is detachably coupled to the driver shaft 11a and is thereby driven to vibrate. The vibration mechanism 11 is mounted to and supported by a weight detector 12. Based on weight-related information detected by this detector, a feeding conveyer, not illustrated in the drawings, is driven, so that the articles of a weight within a predetermined range of weights are constantly present on the dispersion feeder 4.

In the center body 2, a large number of vibration mechanisms 13 are disposed around the vibration mechanism 11. The vibration mechanisms 13 each have a vibration head 13a sticking out of the base's upper surface, and troughs 5a of the linear feeders 5 are detachably coupled to the vibration heads 13a and thereby vibrated.

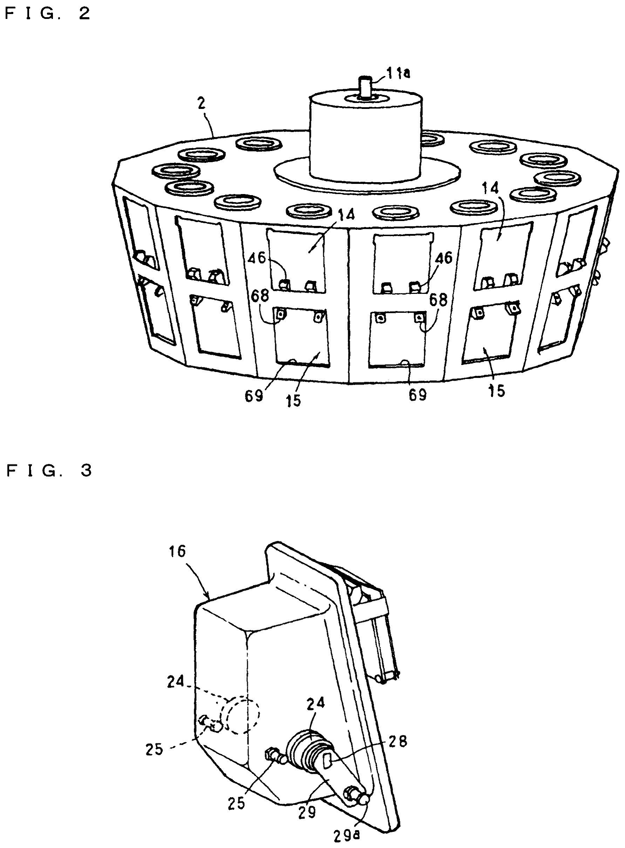

As illustrated in Fig. 2, openings 14 and 15 are formed in upper and lower two stages on the outer circumferential portion of the center body 2. A large number of driver units are mounted to these openings 14 and 15. Driver units 16 are securely mounted to the upper openings 14. The driver units 16 open and close the gates of the feeding hoppers 6. Driver units 17 each having a weight detector are securely mounted to the lower openings 15. The driver units 17 open and close the gates of the weighing hoppers 7. The feeding hoppers 6 are removably attached to the driver units 16, and the weighing hoppers 7 are removably attached to the driver units 17.

Next, the feeding hopper 6 and the weighing hopper 7 and how to attach these hoppers are hereinafter described. For the purpose of illustration, "center side" refers to a direction toward the core of the center body 2, and "back side" refers to a direction away from the center body 2.

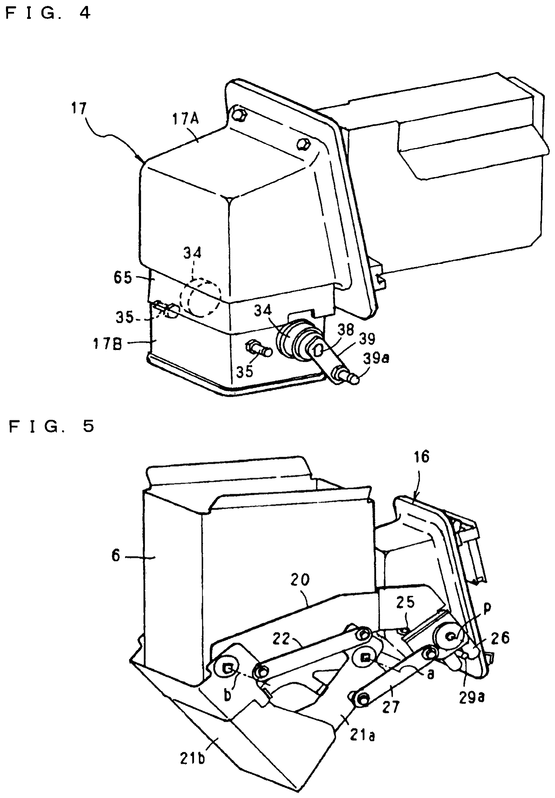

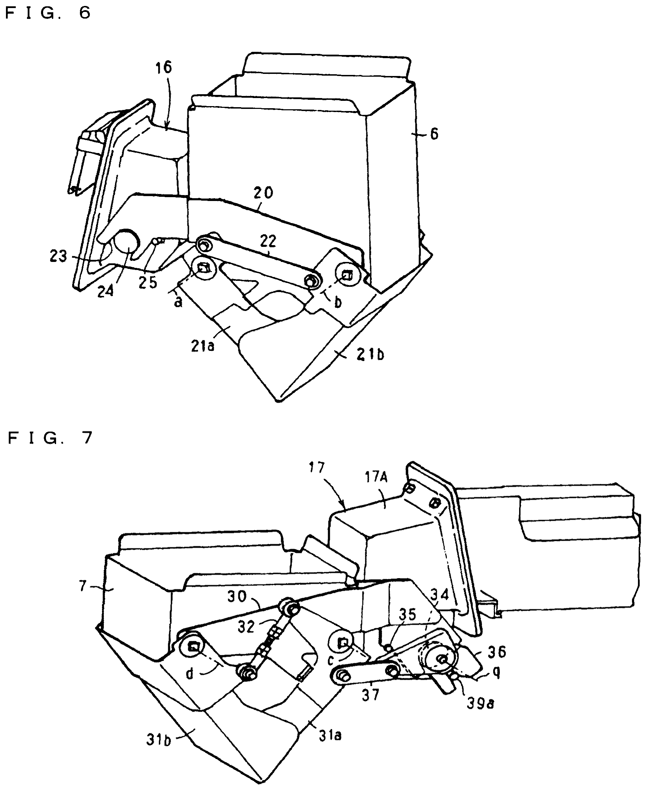

Fig. 3 is a perspective view of a driver unit 16 for feeding hopper. This driver unit drives the gate of the feeding hopper 6 to open and close. Fig. 4 is a perspective view of a driver unit 17 for weighing hopper. This driver unit drives the gate of the weighing hopper 7 to open and close. Fig. 5 is a perspective view, from one side of the lateral direction (right side), of the feeding hopper 6 attached to the driver unit 16. Fig. 6 is a perspective view, from the other side of the lateral direction (left side), of the feeding hopper 6 attached to the driver unit 16.

As illustrated in Figs. 5 and 6, a pair of brackets 20 are securely welded to outer lateral surfaces on both sides of the feeding hopper 6. These brackets 20 are extending toward the center side. Inner gates 21a and an outer gate 21b of the feeding hopper 6 are fitted to these brackets 20 in a manner that these gates are rotatable around fulcrums "a" and "b". The inner and gates 21a and 21b are coupled to each other with an interconnection linkage 22 in an interlocking manner. In response to the inner gates 21a being opened and closed, the outer gate 21b is correspondingly rotated to open and close.

Recesses 23 are formed downward at ends of the bracket 20 extending toward the center side. These recesses 23 are engaged from the upper side with bosses 24 protruding from the outer lateral surfaces on both sides of the driver unit 16. Further, inner corners of the brackets 20 are mounted to and engaged with support pins 25 protruding from the outer lateral surfaces on both sides of the driver unit 16. Thus, the whole feeding hopper 6 may be immovably supported, keeping a certain position, by the driver unit 16.

An operation arm 26 is attached to one of the brackets 20 illustrated in Fig. 5 in a manner that this operation arm is rotatable around a fulcrum "p". This operation arm 26 and the inner gate 21a are coupled to each other in an interlocking manner through an operation linkage 27. In response to the operation arm 27 being rotated back and forth, the gates 21a and 21b are correspondingly rotated to open and close.

On one outer lateral side of the driver unit 16 is a driver shaft 28 protruding from one of the bosses 24, as illustrated in Fig. 3. A driver arm 29 is coupled to the driver shaft 28 and is rotatable by this driver shaft. A drier pin 29a is attached to an edge of the driver arm 29, and one free end of the operation arm 26 is engaged from the upper side with this driver pin 29a.

By rotating the driver arm 29 back and forth through a predetermined angle, the inner and outer gates 21a and 21b of the feeding hopper 6 are driven to open and close.

The structure of the weighing hopper 7 and how to attach this weighing hopper are basically similar to what has been described in reference to the feeding hopper 6.

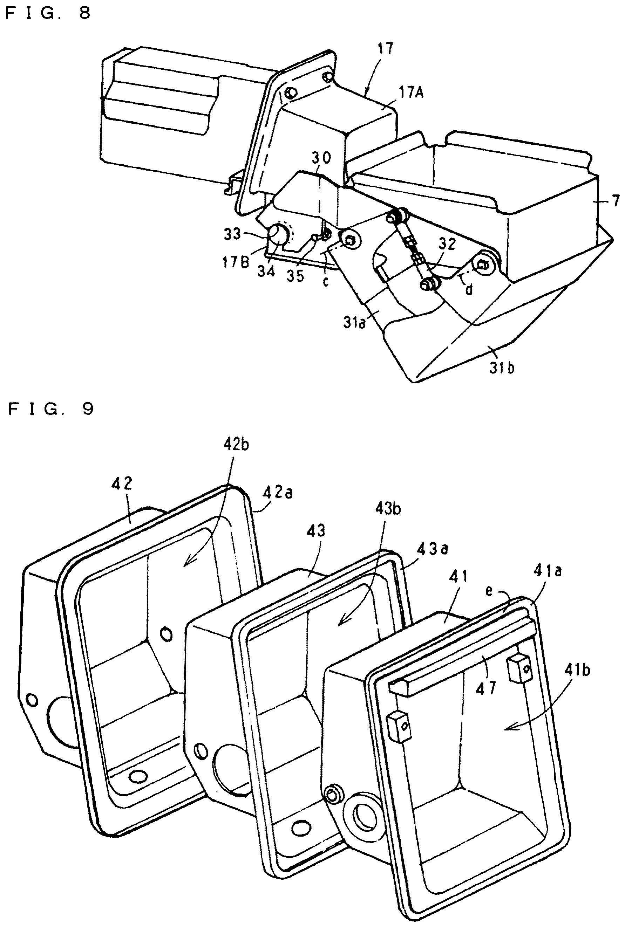

Fig. 7 is a perspective view, from one side of the lateral direction (right side), of the weighing hopper 7 attached to the driver unit 17. Fig. 8 is a perspective view, from the other side of the lateral direction (left side), of the weighing hopper 7 attached to the driver unit 17.

The driver unit 17 for weighing hopper has an upper unit 17A and a lower unit 17b, as illustrated in Fig. 4. The upper unit 17a contains a weight sensor. The lower unit 17B drives the gate of the weighing hopper 7 to open and close.

As illustrated in Figs. 7 and 8, a pair of brackets 30 are securely welded to the outer lateral surfaces on both sides of the weighing hopper 7. These brackets are extending toward the center side. Inner gates 31a and an outer gate 31b are attached to these brackets 30 in a manner that these gates are rotatable around fulcrums "c" and "d". The inner and outer gates 31a and 31b are coupled to each other with an interconnection linkage 32 in an interlocking manner. In response to the inner gates 31a being opened and closed, the outer gate 31b is correspondingly rotated to open and close.

Recesses 33 are formed downward at ends of the bracket 30 extending toward the center side. These recesses 33 are engaged from the upper side with bosses 34 protruding from the outer lateral surfaces on both sides of the driver unit 17B. Further, inner corners of the brackets 30 are mounted to and engaged with support pins 35 protruding from the outer lateral surfaces on both sides of the lower unit 17B. Thus, the whole weighing hopper 7 may be immovably supported, keeping a certain position, by the lower unit 17B.

An operation arm 36 is mounted to the bracket 30 on the right side illustrated in Fig. 7 in a manner that this operation arm is rotatable around a fulcrum "q". This operation arm 36 and the inner gate 31a are coupled to each other with an operation linkage 37 in an interlocking manner. In response to the operation arm 37 being rotated back and forth, the gates 31a and 31b are correspondingly rotated to open and close.

On one outer lateral side of the lower unit 17B is a driver shaft 38 protruding from one of the bosses 34, as illustrated in Fig. 4. A driver arm 39 is coupled to the driver shaft 38 and is rotatable by this driver shaft. A drier pin 39a is attached to an edge of the driver arm 39, and one free end of the operation arm 36 is engaged from the upper side with this driver pin 39a.

By rotating the driver arm 39 back and forth through a predetermined angle, the inner and outer gates 31a and 31b of the weighing hopper 7 are driven to open and close.

The combination weighing apparatus used to handle and weigh foodstuffs is provided with a conventionally called product zone which refers to a region in direct contact with articles to be weighed or a surrounding region immediately above the articles. The devices and/or components of the apparatus in this product zone need to cleaned at times to remove any article residues.

The top cone 4a of the dispersion feeder 4, troughs 5a of the linear feeders 5, feeding hoppers 6 and weighing hoppers 7 are all removed from the apparatus and separately cleaned, and the center body 2 exposed after the removal of these components is then washed with high-pressure water.

The center body 2 and the driver units 16 and 17 are embedded with various electric devices and controllers, which makes it necessary to prevent cleaning water from penetrating into these units.

The protruding portion of the driver shaft 11a, which the top cone 4a of the dispersion feeder 4 is attachable to and detachable from, is embedded with a known waterproof structure using a seal ring. The protruding portion of the vibration head 13a, which the trough 5a of the linear feeder 5 is attachable to and detachable from, is embedded with a known waterproof structure using a bellows.

This embodiment provides unique waterproof structures for the driver units 16 and 17, details of which are described below with reference to the accompanying drawings.

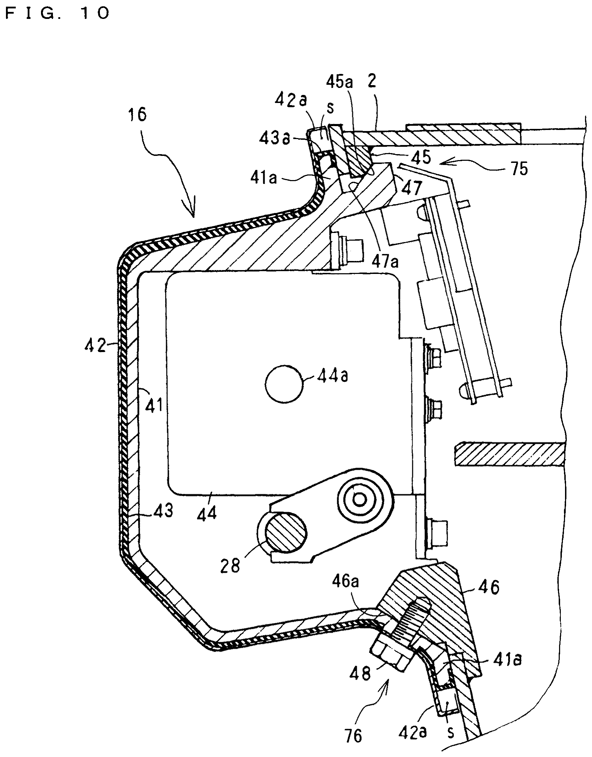

Fig. 9 is an exploded perspective view of a cabinet of the driver unit 16 that drives the feeding hopper 6. Fig. 10 is a longitudinal lateral view of the driver unit 16 coupled to the center body 2.

The cabinet of the driver unit 16 is equipped with a metallic unit case 41 and a metallic cover case 42. The unit case 41 has a large opening 41b directed toward the center side; toward the center body 2. The cover case 42 covers the whole unit case 41.

The unit case 41 according to this embodiment is a die-cast case allowed to form into any optional shape and made of a die-cast metal, for example, an aluminum metal(s).

The cover case 42 constituting the cabinet's outer circumferential surface is made of a rust-proof metal, for example, brass or a stainless steel which may be hardly corrodible. This embodiments uses a stainless steel plate.

A gap may be likely to form between the die-cast unit case 41 and the cover case 43 obtained by metal-sheet working that covers this unit case 41.

As illustrated in Fig. 1, the cabinet of the driver unit 16 is located in a product zone in the upper direction of the collection chute 8 that guides articles, such as foodstuffs, discharged from the weighing hoppers 7 to drop downward. This cabinet needs to be cleaned at times with cleaning water, which may often involve such risks as penetration of the water into between the unit case 41 and the cover case 42 and resulting bacteria propagation. Thus, a preventive measure(s) is desirable against these risks.

In this embodiment, a packing member 43 that covers the outer circumferential surface of the unit case 41 is held between the unit case 41 and the cover case 42. This packing member 43 includes an elastic sealing material such as a synthetic rubber and has a case-like (box-like) shape having an opening at its one end, similarly to the unit case 41 and the cover case 42.

The packing member 43 serves to seal any gap formed between the unit case 41 and the cover case 42. This packing member may successfully block cleaning water from penetrating into between these cases and also prevent bacteria propagation in the gap.

In the unit case 41, a flange 41a is formed along the whole circumference of the opening 41b directed toward the center side. This flange 41a is allowed to abut against the outer circumference of the center body 2. The packing member 43 that covers the unit case 41 also has a large opening 43b directed toward the center side. As illustrated in Fig. 10, a turn-up flange 43a is formed along the whole circumference of the opening 43b. The turn-up flange 43a is externally fitted to the outer circumferential portion of the flange 41a of the unit case 41. The cover case 42 that covers the packing member 43 also has an opening 42b directed toward the center side. A flange 42a is formed along the whole circumference of the opening 42b. This flange 42a serves to cover the turn-up flange 43a of the packing member 43 from the outer circumferential side.

As illustrated in Fig. 10, the flange 42a of the cover case 42 is formed more outward than the outer circumference of the turn-up flange 42a, and an annular gap "s" is circumferentially formed between the flange 42a and the turn-up flange 43a.

When the driver unit 16 is coupled to the center body 2, the front edge of the flange 42a of the cover case 42 is slightly spaced away from the outer circumferential surface of the center body 2. This may prevent any contact of the front edge of the flange 42a with the outer circumferential surface of the center body 2 prior to contact of the front end surface of the flange 41a of the unit case 41 with this outer circumferential surface.

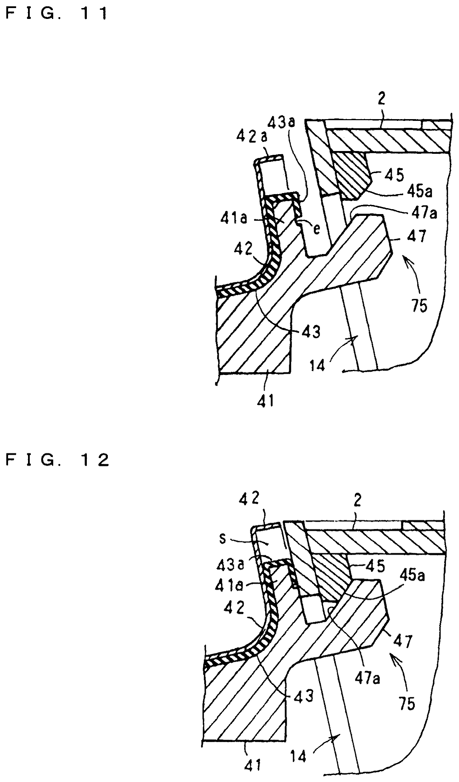

A stepped portion "e" for packing attachment is formed along the whole circumference of the front end surface of the flange 41a. The depth of this stepped portion "e" is slightly smaller than the thickness of the front portion of the flange 41a. As illustrated in Fig. 11, the front portion of the flange 43a externally fitted to the flange 41a is slightly protruding farther than the front end surface of the flange 41a. The amount of this protrusion serves as a margin for elastic fastening when the unit case 41 is mounted to the center body 2. As illustrated in Fig. 12, the front portion of the turn-up flange 43a serves as a packing member when the driver unit 16 is mounted to the center body 2. This may ensure waterproofness in the opening 14 of the center body 2 and in the opening 41b of the unit case 41 of the driver unit 16.

Possibly, cleaning water may penetrate into the flange 42 from between the outer circumferential surface of the center body 2 illustrated in Fig. 12 and the front edge of the flange 42a of the cover case 42. The annular gap "s" between the flange 42a and the turn-up flange 43a may serve as a flow path that guides cleaning water, if penetrating into the flange 42a, to flow downward out of this flange.

Though any detailed structure is not illustrated in the drawings, the unit case 41 is embedded with a stepping motor 44, as illustrated in Fig. 10. The stepping motor 44 is laterally disposed, and a motor output shaft 44a of this stepping motor is coupled in an interlocking manner to a driver shaft 28 through a linkage mechanism. To this driver shaft 28 is coupled the driver arm 29 for gate opening and closing.

In the cabinet of the driver unit 16 illustrated in Fig. 9, the packing member 43 is fitted into the opening 42b of the cover case 42, and the unit case 41 is fitted into the opening 43b of the packing member 43. The cover case 42, packing member 43 and unit case 41 have similar outer shapes and smaller outer dimensions in the mentioned order. These cases and packing member are sequentially put together in the form of nesting to form a cabinet.

The whole outer circumferential surface of the unit case 41 is covered with the case-like packing member 43, and the whole outer circumferential surface of the packing member 43 is covered with the cover case 42.

To assemble these components into the cabinet of the driver unit 16, an adhesive is applied to the inner side of the turn-up flange 43a of the packing member 43, and the adhesive-applied, turn-up flange 43a is fitted onto the flange 41a of the unit case 41 to form the unit case 41 and the packing member 43 into an integral unit. Then, an adhesive is applied to a suitable portion on the outer surface of the packing member 43, for example, the rear outer surface of the turn-up flange 43a, and the packing member 43 is then fastened into the cover case 42. The cabinet of the driver unit 16 is thus allowed to have a three-layer structure in which these components are integral with one another.

Next, how to mount the driver unit 16 to the center body 2 is hereinafter described.

As illustrated in Fig. 10, a support member 45 having an inclined surface 45a is securely welded to an inner upper edge of the opening 14 of the center body 2. Paired attachment blocks 46 each having a downward inclined surface 46a are securely welded to a lower edge of the opening 14. A coupling protrusion 47 is formed in an upper portion of the opening 41b of the unit case 41 directed toward the center side. This coupling protrusion 47 has an inclined surface 47a and protrudes obliquely upward.

The inclined surface 45a of the support member 45 in the upper portion of the center body 2 and the inclined surface 47a of the coupling protrusion 47 in the upper portion of the unit case 41 are engaged with each other at an engaging portion 75. A coupling portion 76 is formed in a lower portion of the center body 2 and of the unit case 41. In this coupling portion 76, the downward inclined surfaces 46a of the attachment block 46 and the unit case 41 are fastened with a fastening member; bolts 48.

When the driver unit 16 is mounted to the center body 2, the coupling protrusion 47 is first engaged with the support member 45 from the lower side, and the driver unit 16 is pushed against the outer circumferential surface of the center body 2. Then, a lower portion of the unit case 41 is securely fastened into the attachment blocks 46 with two bolts 48.

When the lower portion of the unit case 41 is fastened with bolts and thereby pressed onto the inclined surfaces 46a of the attachment blocks 46, the driver unit 16 is pushed upward. As a result, the inclined surface 47a of the coupling protrusion 47 is pushed hard against and engaged with the inclined surface 45a of the support member 45 under the wedge effect. Thus, the driver unit 16, by having its lower portion fastened at two positions with bolts alone, may be firmly and securely fastened without wobbling.

Thus, the driver unit 16 may be readily mounted to the center body 2 by simply fastening the lower portion of the unit case 41 at two positions into the attachment blocks 46 using two bolts 48.

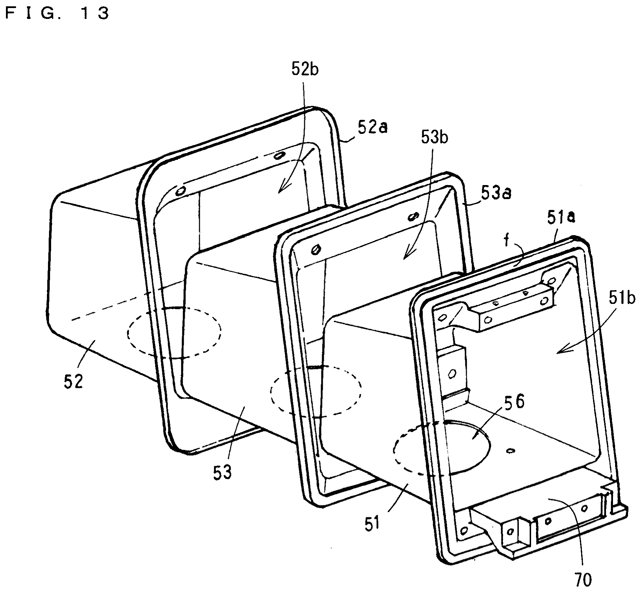

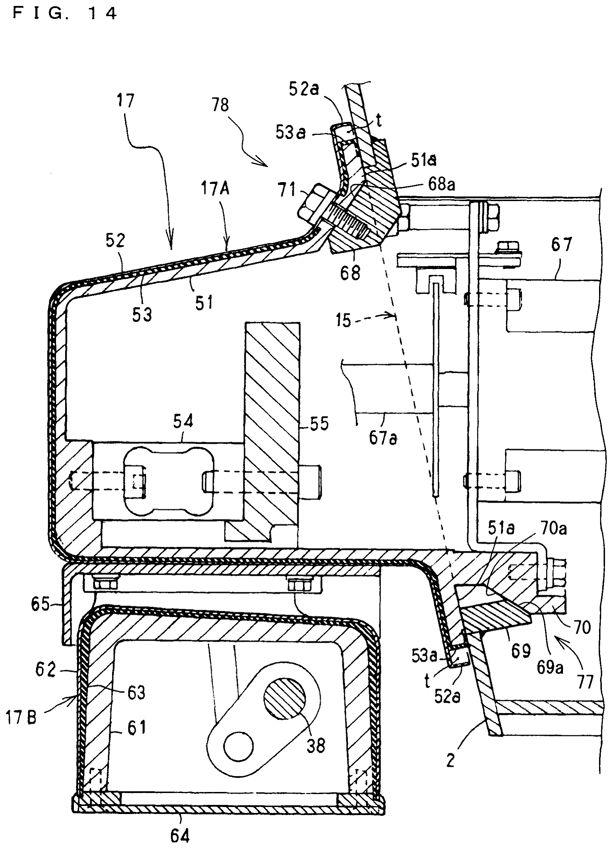

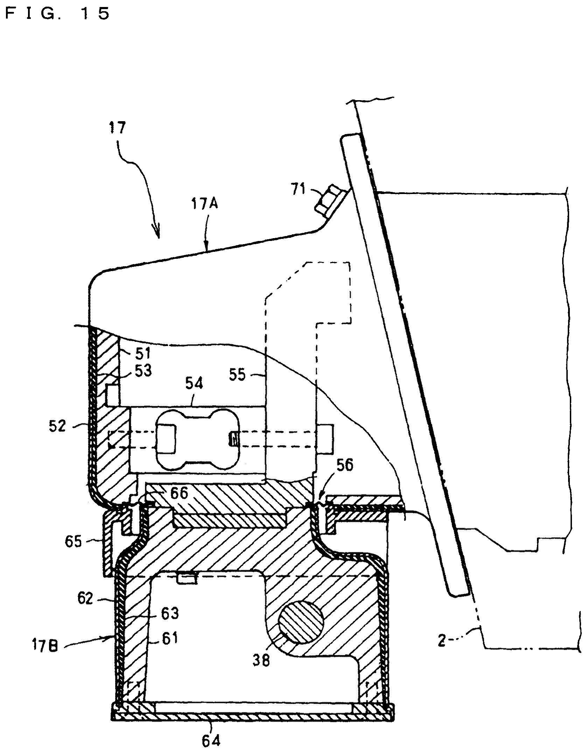

Fig. 13 is an exploded perspective view of the cabinet in part of the driver unit 17 of the weighing hopper 7. Figs. 14 and 15 are longitudinal lateral views of the driver unit 17 coupled to the center body 2.

As illustrated in Fig. 13, the cabinet of the upper unit 17A of the driver unit 17 includes a unit case 51 made of a die-cast metal such as an aluminum alloy, a cover case 52 that covers the whole unit case 51, and a packing member 53. The unit case 51 has a large opening 51b directed toward the center side, i.e., toward the center body 2. The cover case 52 is formed from a rust-proof, stainless steel plate. The packing member 53 is an elastic sealing member held between the unit case 51 and the cover case 52 along their whole lengths.

The packing member 53 that covers the whole circumferential surface of the unit case 51 may serve to seal any gap between the unit case 51 and the cover case 52, preventing penetration of cleaning water and possible bacteria propagation in the gap.

Along the whole circumference of the opening 51b directed toward the center side of the unit case 51 is formed a flange 51a allowed to abut against the outer circumferential surface of the center body 2. The packing member 53 that covers the unit case 51 also has a large opening 53b directed toward the center side, and a turn-up flange 53a to be externally fitted to the flange 51a of the unit case 51 is formed along the whole circumference of the opening 53. Further, the cover case 52 that covers the packing material 53 has a large opening 52b directed toward the center side, and a flange 52a that covers the turn-up flange 53a of the packing member 53 is formed along the hole circumference of the opening 52b.

Though not illustrated in an enlarged view, the unit case 51 has an annular stepped portion "f", similarly to the driver unit 16 of the weighing hopper 6. This stepped portion is formed along the whole circumference of the front end surface of the flange 51a. The turn-up flange 53a of the packing member 53 is externally fitted to this stepped portion "f". The front end of the turn-up flange 53a externally fitted to the stepped portion "f" protrudes slightly farther than the front end surface of the flange 51a. The amount of this protrusion of the front end surface of the turn-up flange 53a serves as a margin for elastic fastening when the driver unit 17 is mounted to the center body 2. This may ensure waterproofness in the opening 15 of the center body 2 and in the opening of the upper unit 17A.

Like the driver unit 16 of the feeding hopper 6, the flange 52a of the cover case 52 is disposed more outward than the outer circumference of the turn-up flange 53a, and an annular gap "t" is formed between the flange 52a and the turnup-flange 53a, as illustrated in Fig. 14. This annular gap serves as a flow path for drainage of cleaning water possibly penetrating into the flange.

In the upper unit 17A, a load cell 54; weight sensor, is securely held and in a cantilever manner, and a support block 55 is coupled to a free end of the load cell 54 for weight load application. A lower end of the support block 55 is facing an opening 56 formed on the lower surface of the upper unit 17A, and the lower unit 17 is supportably coupled to a lower end of the support block 55, as illustrated in Fig. 15.

The weight of the whole lower unit 17B mounted with the weighing hopper 7 is applied to the free end of the load cell through the support block 55, and distortion of the load cell 54 is electrically detected through a distortion gauge. Thus, the weight of articles in the weighing hopper 7 is measured.

As illustrated in Figs. 14 and 15, the cabinet of the lower unit 17B has a three-layer structure including a unit case 61, a cover case 62, and a packing member 63. The unit case 61 is an aluminum die-cast member having an opening at its bottom. The cover case 62 covers the unit case 61 and includes a stainless steel plate. The packing member 63 is an elastic sealing member held between the unit case 61 and the cover case 62. The opening at the bottom of this cabinet is covered with a bottom cover 64.

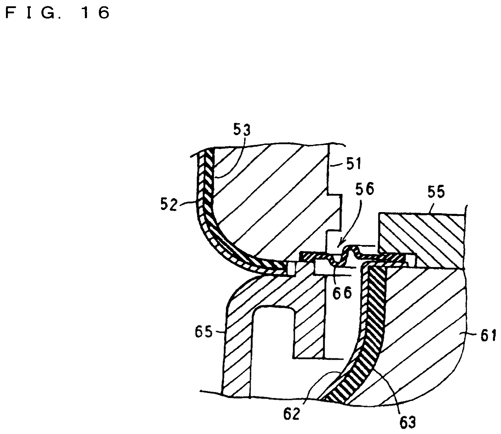

A waterproof cover 65 is securely coupled to the lower surface of the upper unit 17A to cover the lower opening 56. As illustrated in Fig. 16, a ring-like bellows 66 is used to seal an annular gap between the waterproof cover 65 and an upper end of the lower unit 17B. This may ensure waterproofness in the opening 56 of the lower surface of the upper unit 17A, while allowing vertical displacements of the lower unit 17B under load variations.

As illustrated in Fig. 14, the upper unit 17B is mounted with a servo motor 67 having an output shaft 67a. The servo motor 67 serves as an actuator for gate opening and closing and protrudes to a large extent toward the center side. The output shaft 67a is coupled in an interlocking manner to the driver shaft 38 of the driver arm 39 for gate opening and closing of the weighing hopper 7 through an linkage mechanism not illustrated in the drawings.

Like the driver unit 16, the cabinet of the driver unit 17 has a three-layer structure in which the members are integrally bonded with an adhesive applied to suitable positions.

Next, how to mount the driver unit 17 to the center body 2 is hereinafter described.

As illustrated in Fig. 14, a pair of attachment blocks 68 each having an upward inclined surface 68a are securely welded to an upper edge of the opening 15 of the center body 2. A support member 69 is securely welded to a lower edge of the opening 15. A coupling protrusion 70 having an inclined surface 70a is formed in a lower part of the inward opening of the unit case 51. This coupling protrusion 70 has an inclined surface 70a protruding toward the center body 2.

In lower parts of the center body 2 and of the unit case 51 is formed an engaging portion 77. In this engaging portion 77, an inclined surface 69a of the support member 69 of the center body 2 and an inclined surface 70a of the coupling protrusion 70 of the unit case 51 are engaged with each other. In upper parts of the center body 2 and of the unit case 51 is formed a coupling portion 78. In this coupling portion 78, the upward inclined surfaces 68a of the attachment blocks 68 and the unit case 51 are fastened with a fastening member; bolts 71.

When the driver unit 17 is mounted to the center body 2, the coupling protrusion 70 is engaged from the upper side with the support member 69. Then, the driver unit 17 is pushed against the outer circumferential surface of the center body 2, and an upper portion of the unit case 51 is securely fastened into the attachment blocks 68 with two bolts 71.

An upper portion of the unit case 51 is pressed against the upward inclined surfaces 68a of the attachment blocks 68 and fastened with bolts. As a result, the driver unit 17 is pushed down, and the inclined surface 70a of the coupling protrusion 70 is pushed hard against and engaged with the inclined surface 69a of the support member 69 under the wedge effect. Thus, the driver unit 17, by having its upper portion fastened with bolts alone, may be firmly and securely fastened without wobbling.

The driver unit 17 of the weighing hopper 7 has a relatively large weight because this driver unit is mounted with such devices as the servo motor 67; actuator for gate opening and closing, and the load cell 54. This heavy driver unit 17 is engaged from the upper side with the lower engaging portion 77, which allows the weight of the driver unit 17 to be temporarily supported by the center body 2. Then, this driver unit is fastened in the upper coupling portion 78 with bolts. This may eliminate the need to raise the driver unit 17 upward during bolt-used fastening, facilitating the mounting work of the driver unit 17.

### OTHER EMBODIMENTS

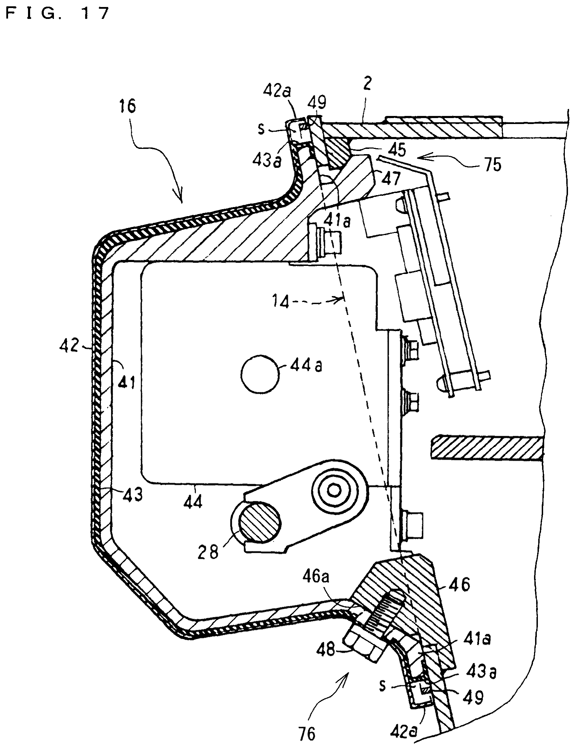

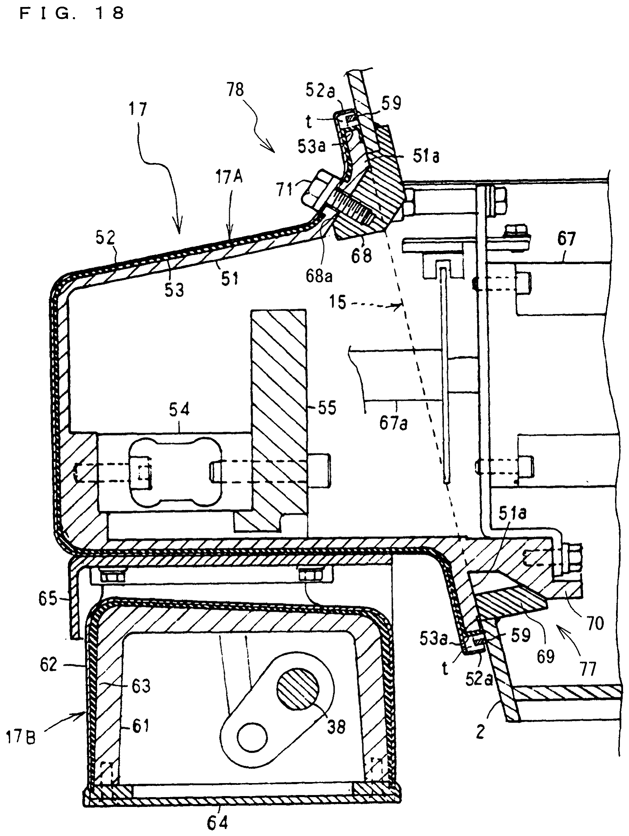

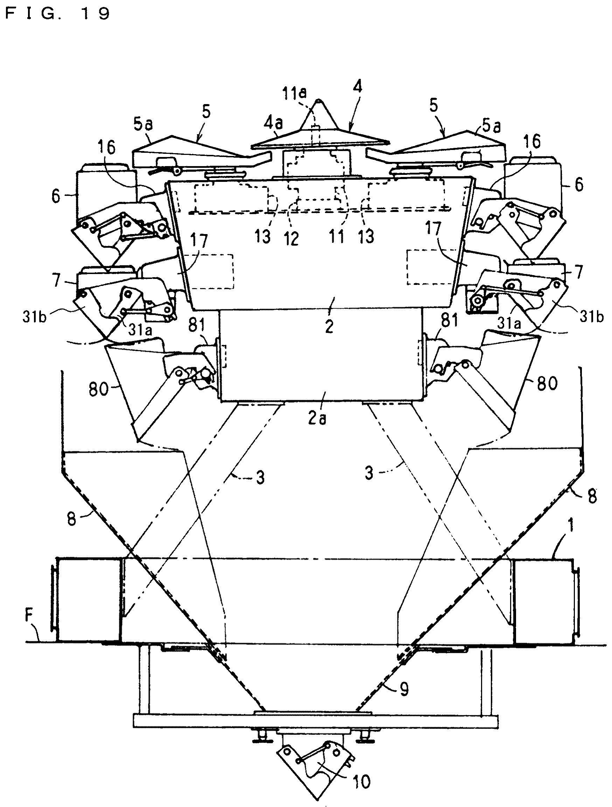

This invention is feasible as described below.
1] The combination weighing apparatus of the earlier embodiment is equipped with multiple sets of weighing units each including a linear feeder, a feeding hopper and a weighing hopper in which these weighing units are disposed circumferentially around the dispersion feeder. In other embodiments, this invention may be applicable to a horizontal type combination weighing apparatus in which multiple sets of weighing units each including a linear feeder, a feeding hopper and a weighing hopper are horizontally arranged in a row next to one another and coupled to a laterally long center body.
2] As illustrated in Figs. 17 and 18, blocking protrusions 49 and 59 made of, for example, a stainless steel may be securely welded annularly to the outer circumferential surface of the center body 2 around the openings 14 and 15. In this instance, these protrusions are formed to fit into annular gaps "s" and "t" formed between the flanges 42a and 52a of the cover cases 42 and 52 and turn-up flanges 43a and 53a of the packing members 43 and 53.
   During cleaning using high-pressure cleaning water, the blocking protrusions 49 and 59 block the high-pressure cleaning water blown into the flanges 42a and 52a through between the outer circumferential surface of the center body 2 and front edges of the flanges 42a and 52a. This may prevent direct contact of the high-pressure cleaning water with the turn-up flanges 43a and 53a, avoiding the risk of any damage by the high-pressure cleaning water to the turn-up flanges 43a and 53a of the rubber-made packing members 43 and 53.
3] This invention may be applicable to a combination weighing apparatus according to other embodiments, as illustrated in Figs. 19 to 22.

The combination weighing apparatus according to an embodiment is basically structurally similar to what was described in the earlier embodiment. The same reference signs are appended to any members, devices and functional units similar to those of the earlier embodiment, which will not be described in detail.

The combination weighing apparatus according to this embodiment is equipped with a dispersion feeder 4 and linear feeders 5 on the upper surface of the center body 2 and further has feeding hoppers 6 and weighing hoppers 7 on the outer circumferential portion of the center body 2. The feeding hoppers 6 and the weighing hoppers 7 are mounted to the center body 2 through driver units 16 and 17. The center body 2 has a lower extension 2a, and memory hoppers 80 are attached to the outer circumferential portion of the lower extension 2a through driver units 81. The memory hoppers 80 temporarily retain the weighed articles discharged from the weighing hoppers 7.

The weight of the articles retained in each memory hopper 80, as well as the weight of the articles retained in each weighing hopper 7, is processed by combinatorial computations. The combination weighing operation may achieve a high accuracy through combinatorial computations of a larger number of weight values of the articles in the hoppers 7 and 80.

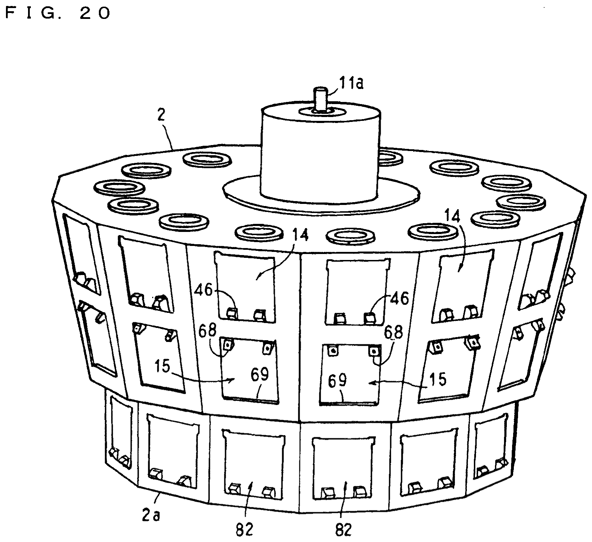

As illustrated in Fig. 20, a large number of openings 82 are formed in the outer circumferential portion of the lower extension 2a of the center body 2. The driver units 81 of the memory hoppers 80 are securely coupled to the lower extension 2a so as to close the openings 82.

The driver units 81 of the memory hoppers 80 have the same specs as the driver units 16 of the feeding hoppers 6. This may conduce to the reduction of production costs.

While detailed description referring to the drawings is skipped to avoid redundant description, the cabinet of the driver unit 81 has a three-layer structure including a die-cast unit case, a cover case formed from a stainless steel plate that covers the unit case, and a packing member fitted into between these cases. The driver units 81 are each securely coupled to the opening 82 of the center body 2 in the same manner as the driver unit 16 of the feeding hopper 6.

In this embodiment in which the memory hoppers 80 are used, inner and outer gates 31a and 31 of the weighing hoppers 7 are independently opened and closed. The articles weighed in each weighing hopper 7 are thrown into the memory hopper 80 by opening the inner gate 31a alone and directly discharged into a collection chute 8 by opening the outer gate 31b alone.

Next, structural features of the memory hopper 8 are hereinafter described.

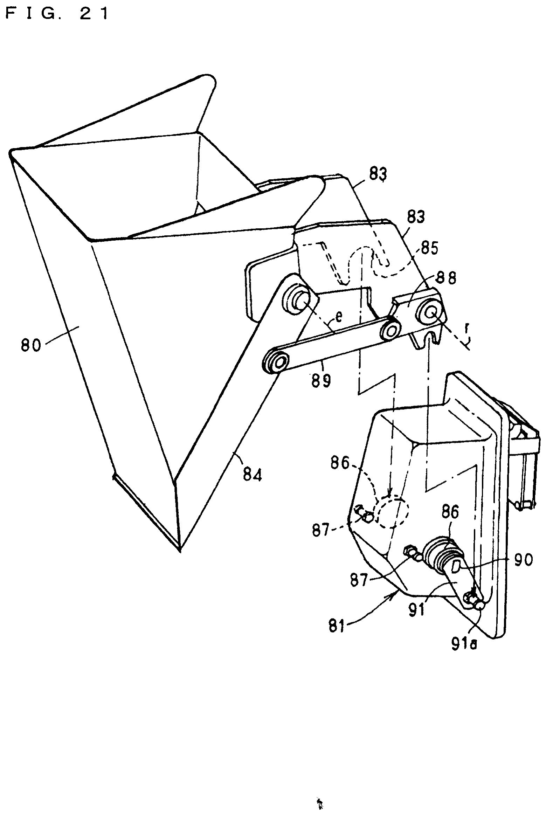

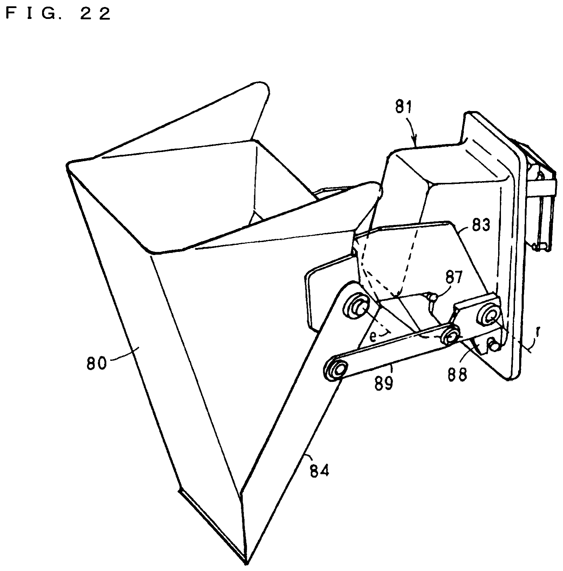

As illustrated in Figs. 21 and 22, a pair of attachment brackets 83 are securely welded to outer lateral surfaces on both sides of the memory hopper 80 and are extending toward the center side. These attachment brackets 83 have one gate 84 which is rotatable around a fulcrum "e".

The attachment brackets 83 each have a downward recess 85 at an end of extension formed toward the center side. These recesses 85 are engaged from the upper side with bosses 86 protruding from outer lateral surfaces on both sides of the driver unit 81, and inner corners of the attachment brackets 83 are fitted from the upper side to support pins 87 protruding from outer lateral surfaces on both sides of the driver unit 81. Thus, the whole memory hopper 80 may be immovably supported by the driver unit 81, keeping a certain position, through four-point engagements; two each on the right and left.

An operation arm 88 is attached to one of the attachment brackets 83 in a manner that this arm is rotatable around a fulcrum "r". This operation arm 88 and the gate 84 coupled to each other in an interlocking manner through an operation linkage 89. In response to the operation arm 88 being rotated back and forth, the gate 84 is correspondingly rotated to open and close.

A driver shaft 90 protrudes from one of the bosses 86 on one outer lateral side of the driver unit 81. This driver shaft 90 is motor-driven through the driver mechanism having the same specs as the driver unit 16 of the feeding hopper 6. A driver arm 91 is securely coupled to an end of protrusion of this driver shaft. A driver pin 91a is attached to an edge of the driver arm 91, and a free end of the operation arm 88 is engaged from the upper side with the driver pin 91a.

The gate 84 of the memory hopper 80 is allowed to open and close by thus rotating the driver arm 91 back and forth through a predetermined angle.

### REFERENCE SIGNS LIST

- 2: center body
- 6: feeding hopper
- 7: weighing hopper
- 14: opening
- 15: opening
- 16: driver unit
- 17: driver unit
- 41: unit case
- 41a: flange
- 42: cover case
- 43: packing member
- 43a: turn-up flange
- 51: unit case
- 51a: flange
- 52: cover case
- 52a: flange
- 53: packing member
- 53a: turn-up flange
- 80: memory hopper
- 81: driver unit
- 82: opening
- s: gap
- t: gap

## Claims

1. A waterproof structure for a combination weighing apparatus, comprising:
a center body having a plurality of openings;
a plurality of hoppers each having a gate in a lower portion thereof;
and
a plurality of driver units each having a cabinet, the plurality of hoppers being removably attachable to a respective one of the plurality of driver units, the cabinets of the plurality of driver units being mountable to the plurality of openings of the center body in a manner that the plurality of openings are closable with the cabinets,
the plurality of driver units being allowed to open and close the gates of the plurality of hoppers,
the cabinets of the plurality of driver units each comprising a unit case, a cover case, and a packing member,
the unit case comprising a metallic material and having an opening formed correspondingly to each of the plurality of openings of the center body,
the cover case comprising a metallic material and covering the unit case,
the packing member comprising an elastic sealing material and being fitted into between the unit case and the cover case so as to cover an outer circumferential surface of the unit case.

2. The combination weighing apparatus according to claim 1, wherein
the plurality of hoppers comprise:
a plurality of feeding hoppers to be supplied with articles to be weighed;
a plurality of weighing hoppers that weigh the articles received from the plurality of feeding hoppers; and
a plurality of memory hoppers that temporarily retain the articles weighed by and received from the plurality of weighing hoppers, and
the plurality of feeding hoppers and the plurality of memory hoppers comprise driver units having identical specs.

3. The waterproof structure for the combination weighing apparatus according to claim 1 or 2, wherein the unit cases each comprise a die-cast metal, and the cover cases each comprise a rust-proof metal.

4. The waterproof structure for the combination weighing apparatus according to claim 1 or 2, wherein
the cover cases each comprise an opening,
the packing members are each in the form of a case having an opening,
outer circumferential surfaces of the unit cases fitted into the packing members through the openings of the packing members are covered with the packing members, and
outer circumferential surfaces of the packing members are covered with the cover cases.

5. The waterproof structure for the combination weighing apparatus according to claim 4, wherein
the unit cases each comprise a flange on an outer circumferential portion of the opening thereof, the flanges being allowed to abut against an outer circumferential surface of the center body, and
the packing members each comprise a turn-up flange on an outer circumferential portion of the opening thereof, the turn-up flanges being externally mountable to the flanges.

6. The waterproof structure for the combination weighing apparatus according to claim 5, wherein
the cover cases each comprise a flange on an outer peripheral portion of the opening, the flanges each being allowed to cover the turn-up flanges of the packing members from an outer circumferential side thereof.

7. The waterproof structure for the combination weighing apparatus according to claim 6, wherein
there is a void between each of the turn-up flange of the packing member and of the flange of the cover case that covers the flange, the void having an annular shape along an outer circumference of the opening of the cover case.

8. The waterproof structure for the combination weighing apparatus according to claim 4, further comprising:
one of an engaging portion or a coupling portion in an upper portion of the opening of each of the unit cases and in an upper portion of each of the plurality of openings of the center body, an inclined surface of each of the unit cases and an inclined surface of the center body being engageable with each other at the engaging portion or each of the unit cases and the center body being allowed to couple to each other with a fastening member at the coupling portion; and
the other one of the engaging portion or the coupling portion in a lower portion of the opening of each of the unit cases and in a lower portion of each of the plurality of openings of the center body, the inclined surface of each of the unit cases and the inclined surface of the center body being allowed to couple to each other with the fastening member at the coupling portion and thereby securable to each other at the engaging portion.
